# EUROPEAN PATENT APPLICATION

(11) **EP 4 098 862 A1**
(43) Date of publication of application: **07.12.2022**
(21) Application number: 21275067.3
(22) Date of filing: 01.06.2021
(51) Int. Cl.: F02K 5/00, F01D 15/10

(54) **PROPULSION SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention provides a propulsion system (1000) for a vehicle. The propulsion system comprises: a jet engine (10) for generating thrust, having a first end and a second end, the jet engine comprising: an inlet (101) arranged at the first end and an exhaust (106) arranged at the second end; at least one fan arranged proximate to the inlet for drawing air into a combustion chamber (104); and a turbine (105) arranged proximate to the exhaust for driving the at least one fan. The propulsion system also comprises an electric motor (20) mechanically coupled to the at least one fan to drive the at least one fan (102) to rotate while the at least one fan is being simultaneously driven by the turbine; and a controller for controlling the electric motor. The present invention also provides an aircraft having at least one propulsion system, and a method of operating a propulsion system.

## Description

### FIELD

The present disclosure relates to a propulsion system. The present disclosure also relates to an aircraft having the propulsion system and a method of operating the propulsion system.

### BACKGROUND

Since inception, civil aircraft jet engines have used increasingly large engine fans to increase efficiency. This has not been reflected in the design of military jet engines. For example, the Trent 1000 engine used in modern wide-body airliners has a bypass ratio (the ratio between mass flow rate of air flowing past the fan to that going through the gas turbine portion of the engine) of about 11:1. This compares to a bypass ration of about 1.2:1 for the RB199 in a Tornado (relatively high by military standards) and just 0.4:1 for the EJ200 in a Typhoon. A higher bypass ratio means the jet engine is more efficient (i.e. lower fuel consumption for the same thrust).

The reason for the low bypass ratio in military jets is mainly due to engine performance. Large fans make the engine less responsive and so less desirable on aircraft where rapid variations in airspeed are required (e.g. aircraft intended for air-to-air combat, otherwise known as fast jet aircraft). Further, a larger fan increase the weight of the jet engine, without a corresponding increase in power generation, therefore power-to-weight ratio is suppressed. Clearly a very large fan is not practical in a fast jet aircraft due to the limited volume within the airframe for housing such a fan, but there is still scope for providing jet engines with larger fans than presently available.

There is therefore a need for a jet engine for fast jet aircraft that is more efficient than presently available but does not have a reduced performance.

### SUMMARY

According to a first aspect of the present disclosure, there is provided a propulsion system for a vehicle, the propulsion system comprising:
a jet engine for generating thrust, having a first end and a second end, the jet engine comprising:
   an inlet arranged at the first end and an exhaust arranged at the second end;
   at least one fan arranged proximate to the inlet for drawing air into a combustion chamber; and
   a turbine arranged proximate to the exhaust for driving the at least one fan;
an electric motor mechanically coupled to the at least one fan to drive the at least one fan to rotate while the at least one fan is being simultaneously driven by the turbine; and
a controller for controlling the electric motor.

Advantageously, the propulsion system tends to be more responsive to control inputs than traditional propulsion systems having fans of the same diameter. Further, the fan may advantageously be driven to rotate faster than would be otherwise achievable using a turbine alone. Therefore, it is possible to manufacture more efficient engines having larger fans, without a significant reduction in performance.

The controller may be arranged to control the electric motor to drive the at least one fan if it is determined that augmentation is required to achieve a received propulsion command. The propulsion command may be received by the controller from a user interface, for example a throttle in a cockpit. The propulsion command may be a demand to increase, maintain or reduce thrust.

The controller may be arranged to control the electric motor to drive the at least one fan when it is determined that the propulsion command cannot be achieved within a threshold time period using the turbine alone.

The controller may be arranged to selectively operate the electric motor in either a first mode to drive the at least one fan, or a second mode to generate electricity using the inertia of the at least one fan.

The controller may be arranged to selectively operate the electric motor in either a first mode to increase the rotational velocity of the at least one fan to increase thrust generated by the jet engine, or a second mode to generate electricity using the inertia of the at least one fan.

The controller may be arranged to modify the second mode by increasing or decreasing the electrical load on the electric motor in accordance with whether a command to respectively reduce thrust or maintain thrust is received.

The controller may be arranged to determine whether to operate the electric motor in the first mode or the second mode based on a received demand for thrust.

The controller may be arranged to selectively operate the electric motor in either the first mode to increase the rotational velocity of the at least one fan on receiving a demand to increase thrust generated by the jet engine, or the second mode to generate electricity on receiving a demand to either maintain or reduce the thrust generated by the jet engine.

The controller may comprise a switch.

The propulsion system may comprise a power source arranged to supply power to the electric motor. The electric motor may be arranged to use the inertia of the at least one fan, when the jet engine is decelerating or maintaining a constant thrust, to generate electricity and store said electricity using the power source. The power source may provide the electrical load to modify the second mode.

The power source may comprise at least one rechargeable battery. Alternatively, the power source may comprise at least one capacitor.

The jet engine may be a turbofan comprising a compressor, and the at least one fan may comprise an intake fan arranged in the inlet for drawing air into the compressor. Alternatively, the jet engine may be a turbojet, and the compressor may comprise the at least one fan.

According to a second aspect of the present invention, there is provided an aircraft comprising at least one propulsion system according to the first aspect, wherein the electric motor is arranged to increase the rotational velocity of the at least one fan while the aircraft is in flight.

The power supply may be arranged to drive aircraft systems. The aircraft systems may comprise control systems, weapons systems, and/or communications systems.

According to a third aspect of the present invention, there is provided a method of operating a propulsion system comprising a jet engine for generating thrust, having a first end and a second end, the jet engine comprising: an inlet arranged at the first end and an exhaust arranged at the second end; at least one fan arranged proximate to the inlet for drawing air into a combustion chamber; and a turbine arranged proximate to the exhaust for driving the at least one fan, the method comprising:
receiving a propulsion command;
determining whether augmentation is required to achieve the propulsion command;
if augmentation is required, while the turbine is driving the at least one fan, controlling an electric motor to drive at least one fan to draw air into an inlet of the jet engine.

The method may comprise selectively operating the electric motor in either a first mode to drive the at least one fan, or a second mode to generate electricity using the inertia of the at least one fan.

The method may comprise controlling the electric motor to drive the at least one fan when it is determined that the propulsion command cannot be achieved within a threshold time period using the turbine alone.

The method may comprise determining an electrical load to be applied to the electric motor in the second mode based on whether the propulsion command is command to reduce thrust or maintain thrust.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the disclosure will now be described by way of example only and with reference to the accompanying drawings, in which:
Figure 1 is a systematic view of a propulsion system according to an embodiment; and
Figure 2 is a flowchart showing a method of operating a propulsion system according to an embodiment.

For convenience and economy, the same reference numerals are used in different figures to label identical or similar elements.

### DETAILED DESCRIPTION

Generally, embodiments herein relate to using electrical augmentation to improve performance of jet engines. The electrical augmentation is used to spin the compressor fan(s) of the jet engine faster than they would be otherwise driven by the turbine. This allows aircraft requiring higher performance to use jet engines with larger fans, and therefore higher bypass ratio, without a reduction in performance. Here, performance can refer to maximum thrust, rate of thrust increase (acceleration) or rate of thrust decrease (deceleration).

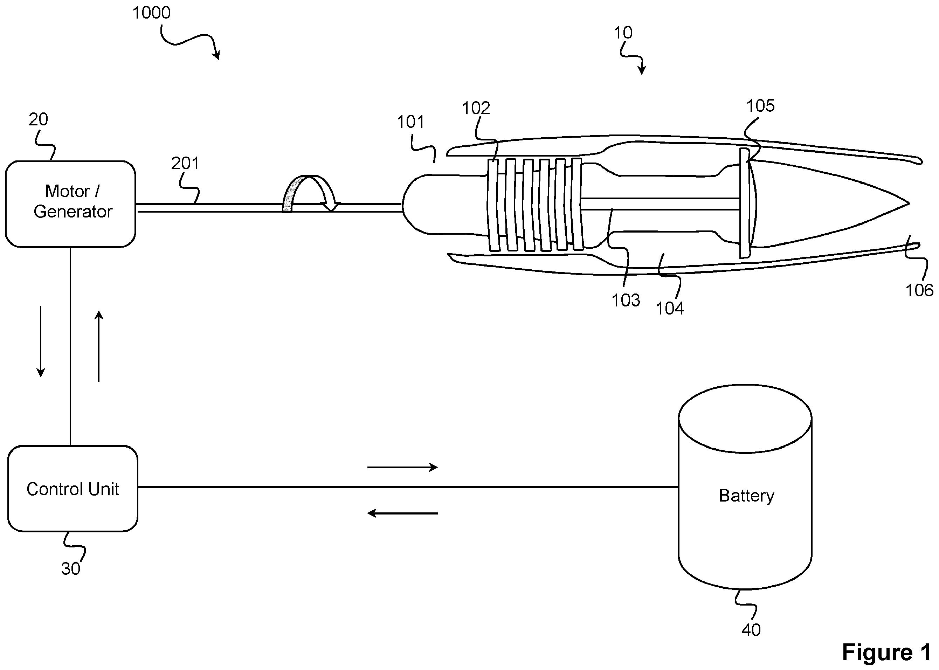

Figure 1 shows a propulsion system 1000 having an augmented turbojet 10. It would be readily understood the augmentation as will now be described is applicable to other types of jet engines, such as turboprops, turbofans, waterjets, and pulsejets.

A turbojet 10 is a gas turbine engine that works by compressing air with an inlet 101 and a compressor 102 (axial, centrifugal, or both); mixing fuel with the compressed air; burning the mixture in the combustion chamber 104; and then passing the hot, high pressure air through a turbine 105 and a nozzle 106. The compressor 102 is a fan (or series of fans) driven by a shaft 103 coupled to the turbine 105, which extracts energy from the expanding gas passing through it. The turbojet 10 converts internal energy in the fuel to kinetic energy in the exhaust, producing thrust. All the air ingested by the inlet 101 is passed through the compressor 102, combustion chamber 104, and turbine 105. The faster the compressor 102 spins, the more air is drawn through the inlet 101 and the more thrust is generated.

Turbofans have an additional fan at the front of the engine (i.e. the side at which air is drawn in, opposite the nozzle 106), which accelerates air in a duct bypassing the core gas turbine engine. Turbofans are the dominant engine type for medium and long-range airliners, and are not typically suited to fast jet aircraft owing to their relatively low performance characteristics when compared with turbojets 10. Turbofans are usually more efficient than turbojets 10 at subsonic speeds, but at high speeds their large frontal area generates more drag. Therefore, in supersonic flight, and in military and other aircraft where other considerations have a higher priority than fuel efficiency, fans tend to be smaller or absent.

In Figure 1, the compressor 102 is driven to rotate not only by the turbine 105, but selectively by an electric motor 20. The electric motor 20 is coupled to the compressor 102 by a drive shaft 201. While the compressor 102 is illustrated being driven by the electric motor 20 in Figure 1, in embodiments where an inlet fan is present (i.e. turbofans), that fan will also, or alternatively, be driven by the electric motor 20 and turbine 105. Electric motors 20 tend to provide relatively high torque compared with other motors, such as combustion engines, and therefore accelerate relatively quickly.

While the electric motor 20 is illustrated as being outside of the body of the turbojet 10, this is not intended to be limiting. This electric motor 20 in an alternative embodiment is integrated with the turbojet 10 to form a single unit. Having the electric motor 20 outside of the turbojet 10 allows existing turbojets 10 to be retrofit with an electric motor 20.

When the system 1000 is operating with augmentation, power provided by the electric motor 20 is used to assist in overcoming the inertia of the compressor 102 fan(s) and aid its (their) acceleration. This supplements the power provided by the turbine 105. In other words, during engine acceleration, as demanded by an operator, torque is provided to the compressor 102 via the drive shaft 201.

In non-augmented operation, the electric motor 20 is switched into regenerative mode; in other words, the rotor of the motor 20 is not driven to rotate by a power supply but rather by the rotation of the drive shaft 201. The cruise stage of a flight, where the turbojet 10 is providing continuous and stable thrust, may be such a case. Here, the torque in the shaft 103, generated by the turbine 105, is passed through the drive shaft 201 to the electric motor 20. This causes the electric motor 20 to act as an electric generator, by rotating a rotor relative to a stator in a magnetic field. In other words, electrical energy recovery takes place during stable operation of the turbojet 10 (i.e. during constant thrust).

During engine 10 deceleration, as demanded by an operator, braking is provided to the compressor 102 via the drive shaft 201. Braking is provided through regenerative braking; in other words, electrical energy generation by the electric motor 20 provides mechanical resistance (friction) to the rotation of the drive shaft 201, which in turn inhibits rotation of the compressor 102. The friction on the drive shaft 201 can be increased, causing more resistance to the compressor 102 than in stable operation, by increasing the electrical load on the electric motor 20. Electrical load may be increased by operating an electrical switch to include more electrical resistors into the circuit. Electrical load may be increased by operating a mechanical switch to move magnets (i.e. the stator) closer to the rotor in the electric motor 20.

The electric motor 20 is electrically coupled to a battery 40. The battery 40 stores energy chemically. The skilled person would appreciate the battery is an energy storage device, and in other embodiments other forms of energy storage devices may instead be used. For example, a capacitor may be used to store energy electrically. A flywheel may be used to store energy mechanically. The battery 40 in configured to convert stored energy into electrical energy. The electrical energy is used to power other the electric motor 20. The electrical energy may also be used to power other systems on the platform on which the propulsion system 1000 is arranged, such as control actuators.

The electric motor 20 is controlled using a control unit 30. The control unit 30 may be arranged to receive vehicle data, such as throttle position, jet engine thrust output, velocity, fuel load, heading or position. The control unit 30 may comprise a switch arranged to selectively operate the motor 20 in either a drive mode to accelerate the compressor 102 to increase its RPM, or an energy recovery mode in which the electric motor 20 operates to apply braking to the compressor 102 to reduce its RPM. This tends to increase the responsiveness and maximum RPM of the turbojet 10. The control unit 30 may comprise a controller arranged to determine the required compressor 102 RPM to satisfy the thrust demand of an operator of a vehicle having the propulsion system 1000. The operator is, for example, the pilot of an aircraft. The pilot may control the airspeed, thrust, direction, or acceleration of the aircraft using a user interface such as a throttle or yoke. The operator may be a software module, such as an autopilot. The operator may be remote from the vehicle. In other words, the vehicle may be manned or unmanned.

The thrust demand may indicate whether a higher acceleration or speed is required than that which would otherwise be achievable using the turbine 105 alone. The thrust demand may be more easily satisfied, or satisfied more quickly, using jet engine augmentation. If a high acceleration or speed is required, the control unit 30 may control the electric motor 20 to rotate the drive shaft 201, thereby rotating the compressor 102 (or other inlet fan, if present). The controller may take any suitable form. For instance, it may be a microcontroller, plural microcontrollers, a processor, or plural processors.

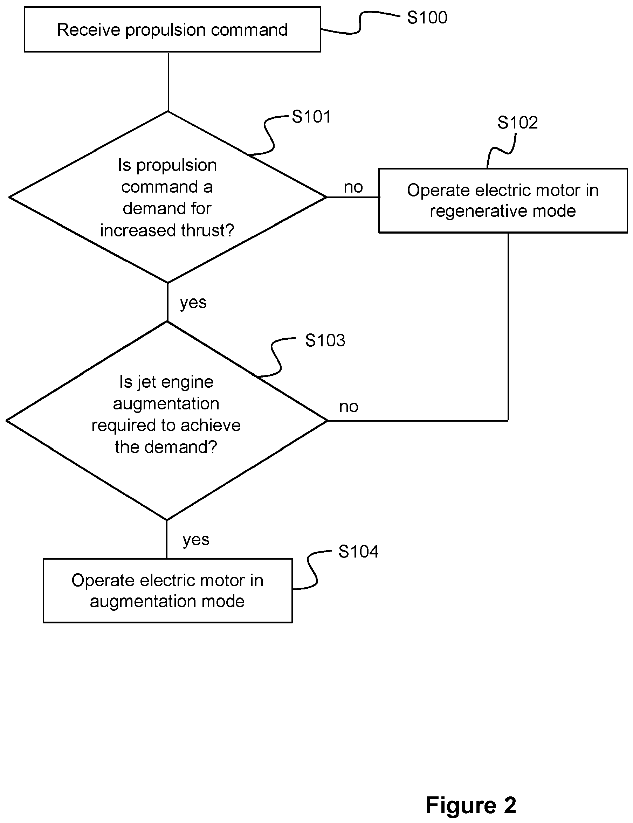

A method of controlling a propulsion system 1000 according to an embodiment will now be described with reference to Figure 2.

In a first step, S100, the control unit 30 receives a propulsion command (i.e. a control signal), for example from a user interface, indicating a desired amount of thrust from the jet engine 10. The propulsion command may be a demand to reduce thrust, increase thrust or maintain the current thrust generated by the jet engine 10.

At step S101, the control unit 30 decodes the propulsion command. If the desired airspeed is lower than the aircraft's current airspeed, in other words, if the propulsion command is a deceleration command, then the method proceeds to step S102. Here, the electric motor 20 is operated in a regenerative mode, whereby mechanical energy from the decelerating compressor 102 is converted by the electric motor 20 into electrical energy. The electrical energy is stored in the battery 40 in the form of chemical energy. Where there is no propulsion command, or the propulsion command indicates the thrust generated by the jet engine 10 should be substantially maintained, the method also proceeds to step S102. To reduce load on the jet engine 10 during periods of constant thrust, the regenerative mode may be adjusted to present less mechanical resistance to the compressor 102.

If the propulsion command is a demand for increased thrust from the jet engine 10 (i.e. an acceleration of the compressor 102), the method proceeds to step S103. Here, it is determined if jet engine 10 augmentation is required. In one embodiment, the control unit 30 determines whether the desired thrust can be achieved by the jet engine 10 using the turbine 105 (having increased fuel flow to the combustion chamber 104) within a predetermined time frame. For example, if the jet engine 10 is presently generating 50% of the its maximum output, and an operator pushes the throttle to 100%, the control unit 30 may determine if the jet engine 10 can accelerate to maximum output within x number of seconds. If this cannot be achieved, the control unit 30 determines augmentation is required by rotating the compressor 102 using an alternative power source (i.e. the electric motor 20). In another example, if the control unit 30 determines 100% thrust has been requested, or if the operator specifically selects an augmentation option, then the control unit 30 determines that jet engine 10 augmentation is required.

If augmentation is not required, the method again proceeds to step S102, where the electric motor 20 is operated in regenerative mode.

If augmentation is required, then the method proceeds to step S104. Here, the electric motor 20 is operated in an augmentation mode (or, in other words, a drive mode). The battery 40 is used to power the electric motor 20 to drive the compressor 102 to rotate, while the compressor 102 is also being driven by the turbine 105. In an alternative embodiment, a separate power source is used to drive the electric motor 20.

The order of the steps presented in Figure 2 is not intended to be limiting. In other words, the steps may be carried out in a different order, or simultaneously, without deviating from the scope of the present invention.

While starter motors for jet engines are known, these are not designed for in-flight augmentation to improve performance, and nor are they used to generate electrical energy.

The propulsion system 1000 has been described herein with reference to use on aircraft. However, it would be appreciated the same concept is equally applicable to ground vehicles having gas turbine engines, and watercraft, thereby providing them with same advantages.

Apparatus, including the control unit 30, for implementing the above arrangement, and performing the method steps to be described with reference to Figure 2, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A propulsion system for a vehicle, the propulsion system comprising:
a jet engine for generating thrust, having a first end and a second end, the jet engine comprising:
an inlet arranged at the first end and an exhaust arranged at the second end;
at least one fan arranged proximate to the inlet for drawing air into a combustion chamber; and
a turbine arranged proximate to the exhaust for driving the at least one fan;
an electric motor mechanically coupled to the at least one fan to drive the at least one fan to rotate while the at least one fan is being simultaneously driven by the turbine; and
a controller for controlling the electric motor.

2. The propulsion system according to claim 1, wherein the controller is arranged to control the electric motor to drive the at least one fan if it is determined that augmentation is required to achieve a received propulsion command.

3. The propulsion system according to claim 2, wherein the controller is arranged to control the electric motor to drive the at least one fan when it is determined that the propulsion command cannot be achieved within a threshold time period using the turbine alone.

4. The propulsion system according to any one of the preceding claims, wherein the controller is arranged to selectively operate the electric motor in either a first mode to drive the at least one fan, or a second mode to generate electricity using the inertia of the at least one fan.

5. The propulsion system according to claim 4, wherein the controller is arranged to modify the second mode by increasing or decreasing the electrical load on the electric motor in accordance with whether a command to respectively reduce thrust or maintain thrust is received.

6. The propulsion system according to any one of the preceding claims, comprising a power source arranged to supply power to the electric motor.

7. The propulsion system according to claim 6, wherein the electric motor is arranged to use the inertia of the at least one fan, when the jet engine is decelerating or maintaining a constant thrust, to generate electricity and store said electricity using the power source.

8. The propulsion system according to claim 7, wherein the power source comprises at least one rechargeable battery.

9. The propulsion system according to any one of the preceding claims, wherein the jet engine is a turbofan comprising a compressor, and wherein the at least one fan comprises an intake fan arranged in the inlet for drawing air into the compressor.

10. The propulsion system according to any one of claims 1 to 8, wherein the jet engine is a turbojet, and wherein the compressor comprises the at least one fan.

11. An aircraft comprising at least one propulsion system according to any one of the preceding claims, wherein the electric motor is arranged to increase the rotational velocity of the at least one fan while the aircraft is in flight.

12. The aircraft according to claim 11, wherein the power supply is arranged to drive aircraft systems.

13. A method of operating a propulsion system comprising a jet engine for generating thrust, having a first end and a second end, the jet engine comprising: an inlet arranged at the first end and an exhaust arranged at the second end; at least one fan arranged proximate to the inlet for drawing air into a combustion chamber; and a turbine arranged proximate to the exhaust for driving the at least one fan, the method comprising:
receiving a propulsion command;
determining whether augmentation is required to achieve the propulsion command;
if augmentation is required, while the turbine is driving the at least one fan, controlling an electric motor to drive at least one fan to draw air into an inlet of the jet engine.

14. The method according to claim 13, comprising selectively operating the electric motor in either a first mode to drive the at least one fan, or a second mode to generate electricity using the inertia of the at least one fan.

15. The method according to claim 14, comprising determining an electrical load to be applied to the electric motor in the second mode based on whether the propulsion command is command to reduce thrust or maintain thrust.
